# FASCICULE DE BREVET EUROPEEN

(11) **EP 1 584 784 B1**
(45) Date de publication et mention de la délivrance du brevet: **05.08.2015**
(21) Numéro de dépôt: 05006674.5
(22) Date de dépôt: 29.03.2005
(51) Int. Cl.: F01D 5/06, F01D 5/28, F01D 25/24, F16B 7/18, F16D 1/033, F16L 23/036

(54) **Dispositif d'assemblage de brides annulaires, en particulier dans une turbomachine**
Einrichtung zur Montage von ringförmigen Flanschen, insbesondere in Turbomaschinen
Assembly device for annular flanges, in particular in turbomachines

(30) Priorité: 09.04.2004 FR 0403737
(43) Date de publication de la demande: 12.10.2005
(73) Titulaire: SNECMA, 75015 Paris (FR)
(72) Inventeur: Charrier, Emmanuel, 77115 Blandy Les Tous (FR); Soupizon, Jean-Luc, 77530 Vaux le Penil (FR)
(74) Mandataire: Ramey, Daniel

(56) Documents cités:
- EP-A- 1 496 266
- DE-A- 3 532 929
- GB-A- 800 491
- GB-A- 871 110
- GB-A- 1 453 458
- US-A- 5 052 891
- US-A- 5 395 211
- US-B1- 6 499 957

## Description

L'invention concerne un dispositif d'assemblage de brides annulaires, en particulier de brides de fixation de pièces d'un rotor ou d'un stator de turbomachine.

Dans les étages de turbine basse-pression des turboréacteurs, des pièces sont assemblées les unes aux autres au moyen de brides annulaires appliquées les unes contre les autres et fixées ensemble par des boulons qui passent dans des orifices des brides annulaires, ces orifices étant répartis de façon régulière sur le tour des brides annulaires.

Certaines de ces brides sont « festonnées », c'est-à-dire que leurs orifices de passage des boulons de fixation sont formés dans des parties pleines qui sont séparées les unes des autres par des échancrures donnant à ces brides annulaires une forme en « feston » ou, en d'autres termes, une forme crénelée à bords arrondis ou rectangulaires.

Dans le cas d'une turbine basse-pression de turboréacteur, les différentes pièces sont empilées verticalement les unes sur les autres et leur fixation au moyen de boulons passant par les orifices des brides annulaires se fait en aveugle. Il se peut donc qu'une bride festonnée soit décalée angulairement par rapport aux autres brides d'un demi-pas entre les orifices de passage des boulons de fixation et qu'alors les boulons enfilés dans les orifices des autres brides passent dans les échancrures de la bride festonnée et non plus dans les orifices prévus dans les parties pleines de la bride. Dans ce cas, la bride festonnée n'est pas fixée solidement aux autres brides, elle n'est que pincée axialement entre les autres brides et elle est susceptible de se décaler angulairement et radialement en cas de desserrage des boulons de fixation ou par effet centrifuge.

Aucun moyen n'est prévu pour assurer un positionnement angulaire correct des brides annulaires de fixation, si ce n'est le soin des opérateurs chargés du montage, et aucun moyen permettant de signaler un mauvais positionnement angulaire aux opérateurs n'est prévu.

Les documents EP-A-1 496 266, GB-A-800 491 et DE-A-35 32 929 décrivent des assemblages par boulons de brides annulaires dont certaines sont festonnées ou comportent des échancrures destinées à recevoir des boulons de fixation d'autres brides annulaires ou de masses d'équilibrage en rotation, aucun moyen n'étant prévu pour assurer un positionnement angulaire des brides les unes par rapport aux autres.

L'invention a notamment pour but d'apporter une solution simple, efficace et peu coûteuse à ce problème.

Elle propose, à cet effet, un dispositif d'assemblage d'au moins deux brides annulaires telles par exemple que des brides de fixation de pièces d'un rotor ou d'un stator de turbomachine, comprenant des moyens de fixation tels que des boulons ou analogues passant dans des orifices desdites brides, une première des brides ayant une forme festonnée ou crénelée et comprenant des échancrures formées entre des parties pleines comportant les orifices de passage des moyens de fixation, caractérisé en ce qu 'une seconde des brides annulaires présente sur sa face tournée vers la première bride au moins un élément en saillie destiné à s'engager axialement dans une échancrure de la première bride pour un positionnement angulaire correct des deux brides l'une par rapport à l'autre.

Grâce à ces éléments en saillie qui s'engagent axialement dans les échancrures, les brides empilées sont bien appliquées l'une sur l'autre quand leur positionnement angulaire relatif est correct. Dans le cas contraire, les deux brides sont écartées axialement l'une de l'autre et cet écartement axial est perceptible par l'opérateur chargé du montage qui est ainsi informé du mauvais positionnement angulaire des brides et qui peut y remédier.

L'élément en saillie constitue un moyen de détrompage signalant à l'opérateur si le positionnement angulaire des brides entre elles est correct ou non.

Dans un premier mode de réalisation de l'invention, l'élément en saillie précité est un pion rapporté sur la seconde des deux brides.

Dans une variante de réalisation de l'invention, l'élément en saillie précité est un ergot usiné ou taillé sur la seconde des deux brides.

Dans ces deux réalisations, le pion ou l'ergot formé en saillie sur la seconde bride peut s'engager dans l'une quelconque des échancrures de la première bride quand le positionnement angulaire relatif des deux brides est correct. Dans le cas contraire, le pion ou l'ergot vient buter sur une partie pleine et empêche l'application axiale des deux brides l'une sur l'autre.

Le dispositif selon l'invention est en particulier destiné à l'assemblage de brides annulaires de fixation qui sont présentées par des disques de rotor, par un cône d'entraînement et par une pièce de retenue axiale des pieds d'aubes sur un des disques dans une turbomachine, en particulier dans une turbine basse-pression d'un turboréacteur, mais est de façon générale applicable dans l'industrie, notamment à chaque fois qu'une bride annulaire festonnée ou crénelée doit être assemblée à d'autres brides annulaires.

L'invention sera mieux comprise et d'autres caractéristiques, détails et avantages de celle-ci apparaîtront plus clairement à la lecture de la description qui suit, faite à titre exemple non limitatif en référence aux dessins annexés dans lesquels :
- La figure 1 est une vue schématique partielle en coupe d'une turbine basse-pression d'un turboréacteur, représentant un assemblage de brides annulaires selon la technique antérieure ;
- La figure 2 est une vue schématique partielle en perspective représentant le positionnement angulaire correct de trois brides du dispositif de la figure 1 ;
- La figure 3 est une vue schématique partielle en perspective représentant le positionnement angulaire incorrect de trois brides du dispositif de la figure 1 ;
- La figure 4 est une vue schématique partielle en perspective correspondant à la figure 2 et représentant un premier mode de réalisation du dispositif selon l'inventivn ;
- La figure 5 est une vue schématique partielle en perspective correspondant à la figure 3 et représentant le premier mode de réalisation du dispositif selon l'invention ;
- La figure 6 est une vue schématique partielle en perspective d'une bride selon un second mode de réalisation de l'invention.

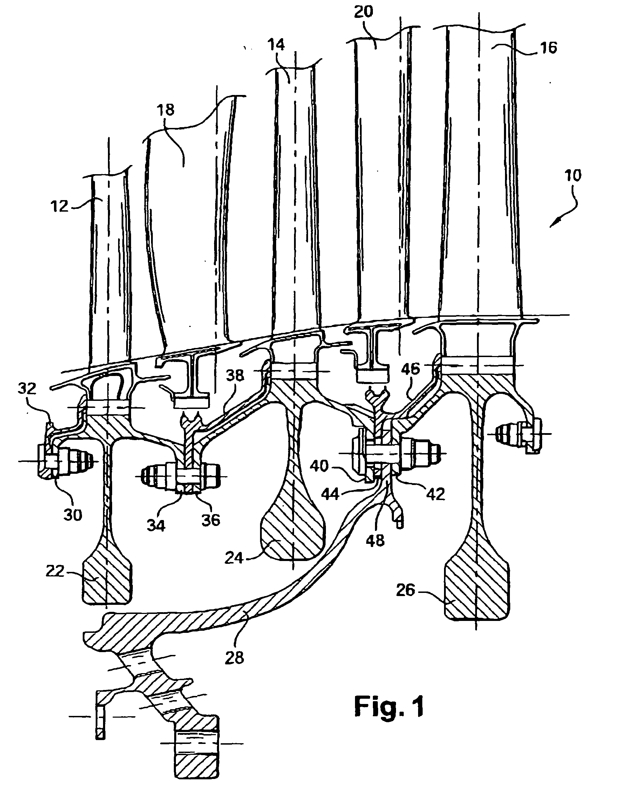

La figure 1 est une vue partielle d'une turbine basse-pression 10 d'un turboréacteur, comprenant trois étages d'aubes mobiles 12, 14, 16 et deux étages d'aubes fixes 18, 20.

Les aubes fixes 18, 20 sont montées par des moyens non représentés, à leurs extrémités radialement externes sur le carter du turboréacteur et les aubes mobiles 12, 14, 16 sont montées par des moyens appropriés, par exemple à queue d'aronde ou analogue, à leurs extrémités radialement intemes sur trois disques 22, 24, 26 du rotor.

Chaque disque 22, 24, 26 comprend une bride annulaire amont et une bride annulaire aval, ces brides servant à la fixation des disques entre eux et sur un cône d'entraînement 28 relié à l'arbre de la turbomachine ainsi qu'à la fixation de flasques annulaires de retenue des pieds d'aubes sur les disques.

Plus précisément, le disque amont 22 comprend une bride annulaire amont 30 sur laquelle est fixé au moyen de boulons un flasque annulaire 32 de retenue des pieds des aubes 12 sur le disque 22, et une bride annulaire aval 34 fixée par des boulons à une bride annulaire amont 36 du disque intermédiaire 24 et à un flasque annulaire 38 de retenue des pieds des aubes 14 sur le disque intermédiaire 24.

Le disque intermédiaire 24 comprend une bride annulaire aval 40 fixée par des boulons à une bride annulaire amont 42 du disque aval 26 ainsi qu'à une bride annulaire 44 d'un flasque 46 de retenue des pieds des aubes 16 sur le disque 26 et à une bride annulaire 48 du cône d'entraînement 28, les brides 44 et 48 étant serrées entre les brides annulaires 40 et 42 des disques 24 et 26.

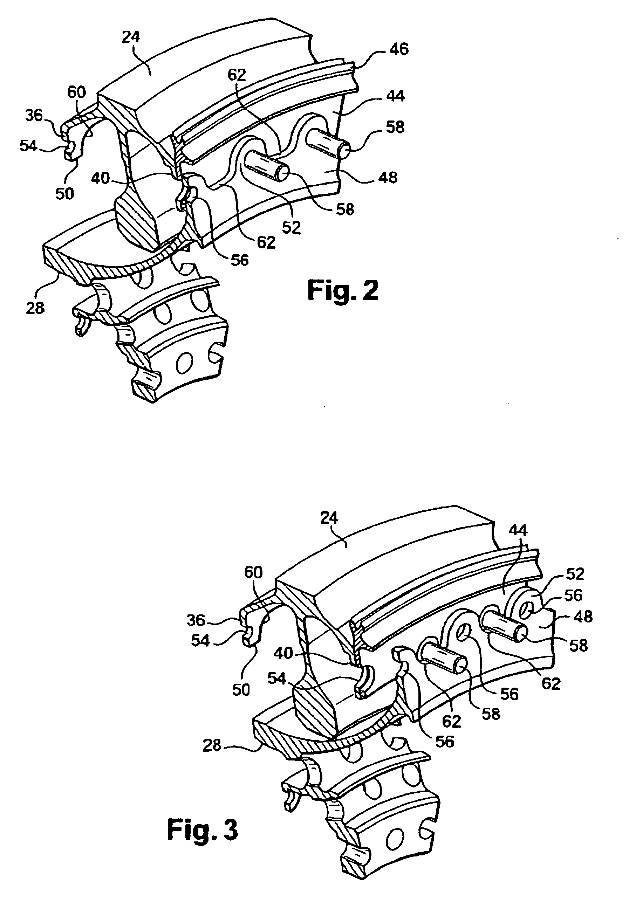

Le dispositif d'assemblage selon l'invention intéresse plus particulièrement les brides annulaires 40, 42, 44 et 48 des disques 24 et 26, du flasque 46 et du cône d'entraînement 28, dont les caractéristiques sont mieux visibles aux figures 2 et 3, mais pourrait s'appliquer éventuellement aux brides 34, 36 et au flasque 38.

On voit sur les figures 2 et 3 que les brides annulaires 36 et 40 du disque 24 et la bride annulaire 48 du cône d'entraînement sont festonnées ou crénelées, c'est-à-dire comprennent des parties pleines 50, 52 comportant des orifices 54, 56 de passage des boulons 58 de fixation, ces parties pleines 50, 52 étant séparées les unes des autres par des échancrures 60, 62.

La bride annulaire 42 du disque aval 26, qui n'est pas représentée aux figures 2 et 3, est également festonnée. Seule la bride annulaire 44 du flasque 46 de retenue des pieds des aubes 16 sur le disque aval 26 n'est pas festonnée et s'étend de façon continue sur 360 degrés.

Au montage, les disques sont empilés verticalement les uns sur les autres et les boulons de fixation 58 sont montés en aveugle. Les têtes de ces boulons sont en appui sur la bride annulaire aval 40 du disque intermédiaire 24 et les écrous sont en appui sur la bride annulaire 42 du disque aval 26. Les boulons sont engagés dans les orifices formés dans la bride annulaire continue 44 du flasque annulaire 46 sans risque d'erreur, et doivent être engagés dans les orifices 56 de la bride annulaire festonnée 48 du cône d'entraînement 28, comme représenté en figure 2.

Du fait de l'empilement axial des pièces et du montage en aveugle des boulons de fixation, il se peut que la bride annulaire 48 du cône d'entraînement 28 ne soit pas positionnée angulairement de façon correcte par rapport aux autres brides annulaires et soit décalée angulairement d'un demi-pas entre les orifices 56 de passage des boulons, comme représenté en figure 3.

Dans ce cas, les boulons 58 qui sont engagés dans les orifices 54 de la bride annulaire 40 du disque 24, dans les orifices de la bride annulaire continue 44 du flasque 46 ainsi que dans les orifices formés dans la bride annulaire 42 du disque aval 26, passent entre les parties pleines 52 de la bride annulaire 48 du cône d'entraînement 28, celle-ci n'étant pas alors fixée de façon sûre aux autres brides mais simplement pincée axialement entre la bride annulaire 44 du flasque 46 et la bride annulaire 42 du disque aval 26.

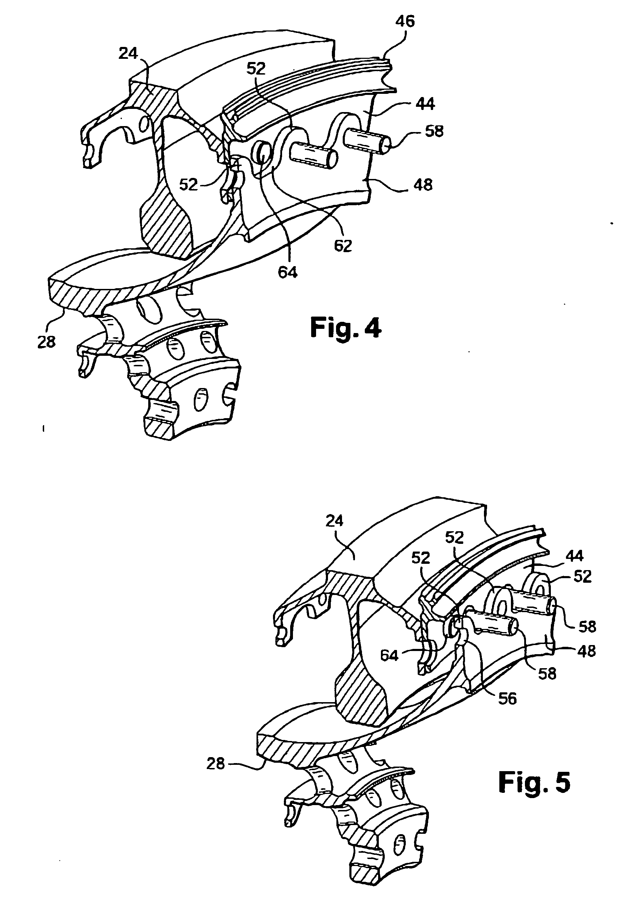

Le dispositif selon l'invention a pour but d'éviter cet inconvénient grâce aux moyens qui sont représentés schématiquement aux figures 4 à 6.

Dans un premier mode de réalisation de l'invention, ces moyens comprennent (Figure 4) un pion cylindrique 64 qui est formé en saillie axiale sur la face de la bride annulaire 44 du flasque 46 qui est destinée à être appliquée sur la bride annulaire 48 du cône d'entraînement 28.

Le pion cylindrique 64 est situé sensiblement au milieu entre deux orifices consécutifs et a un diamètre supérieur à celui des orifices 56 de passage des boulons 58 afin de ne pas entrer dans ces passages. En variante, le pion 64 peut avoir un diamètre quelconque et être décalé radialement par rapport aux orifices 56 de passage des boulons 58.

De cette façon, lorsque le positionnement angulaire des brides annulaires est correct et que les boulons 58 passent dans les orifices formés dans la bride annulaire 48 du cône d'entraînement 28, le pion 64 se trouve, comme représenté en figure 4, entre deux parties pleines 52 de la bride annulaire 48 et ne gêne pas l'application des brides annulaires 44 et 48 l'une sur l'autre.

Par contre, lorsque le positionnement angulaire des brides 44 et 48 est incorrect comme représenté en figure 5, c'est-à-dire lorsque les boulons 58 passent entre les parties pleines 52 de la bride annulaire 48 du cône d'entraînement, le pion cylindrique 64 se trouve en appui sur une partie pleine 52 de la bride annulaire 48 et empêche les brides annulaires 44 et 48 d'être appliquées l'une sur l'autre. L'écart axial entre ces deux brides est perceptible par l'opérateur qui réalise le montage et qui peut donc corriger le positionnement angulaire des brides annulaires et remettre les boulons 58 en place en les faisant passer dans les orifices 56 de la bride annulaire 48 du cône d'entraînement.

Bien entendu, la bride annulaire 44 du flasque 46 peut comporter plusieurs de ces pions cylindriques 64, répartis avantageusement de façon symétrique autour de l'axe de rotation.

Le ou les pions cylindriques 64 sont par exemple rapportés sur la bride annulaire 44 et fixés sur celle-ci par vissage, rivetage ou tout autre moyen approprié.

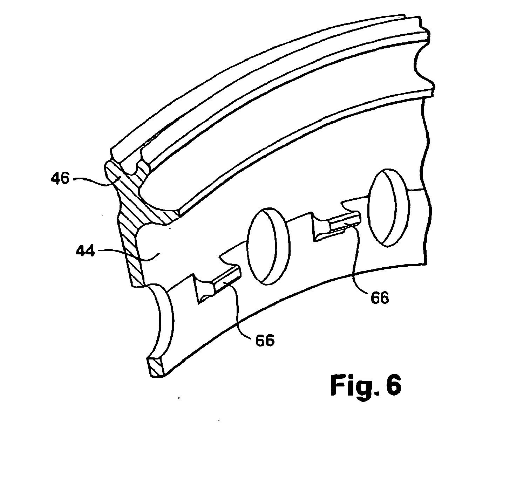

Dans la variante de réalisation représentée en figure 6, la bride annulaire 44 du flasque 46 comprend, sur sa face destinée à être appliquée sur la bride annulaire 48 du cône d'entraînement, un ou des ergots 66 positionnés comme le ou les pions cylindriques 64 précités, entre les orifices de passage des boulons de fixation. A la différence des pions cylindriques rapportés 64, ces ergots 66 sont taillés par usinage dans la masse de la bride annulaire 44.

Bien entendu, diverses modifications évidentes pour l'homme du métier peuvent être apportées aux moyens qui ont été décrits et représentés, dès lors que le positionnement angulaire correct des brides annulaires est défini par l'engagement d'au moins un élément en saillie formé sur une des brides dans une échancrure de l'autre bride.

## Revendications

1. Dispositif d'assemblage d'au moins deux brides annulaires telles par exemple que des brides de fixation de pièces d'un rotor ou d'un stator de turbomachine, comprenant des moyens de fixation tels que des boulons (58) ou analogues passant dans des orifices desdites brides, une première (48) des brides ayant une forme festonnée ou crénelée et comprenant des échancrures (62) formées entre des parties pleines (52) comportant les orifices (56) de passage des moyens de fixation, **caractérisé en ce qu'** une seconde (44) des brides annulaires présente sur sa face tournée vers la première bride au moins un élément en saillie (64, 66) destiné à s'engager axialement dans l'une des échancrures (62) de la première bride pour un positionnement angulaire correct des deux brides (44, 48) l'une par rapport à l'autre.

2. Dispositif selon la revendication 1, **caractérisé en ce que** ledit ou lesdits éléments (64, 66) écartent axialement les deux brides (44, 48) l'une de l'autre quand le positionnement angulaire de ces deux brides est incorrect.

3. Dispositif selon la revendication 1 ou 2, **caractérisé en ce que** le ou chaque élément est un pion (64) rapporté sur la seconde bride annulaire (44).

4. Dispositif selon la revendication 1 ou 2, **caractérisé en ce que** le ou chaque élément est un ergot (66) usiné ou taillé sur la seconde bride annulaire (44).

5. Dispositif selon l'une des revendications précédentes, **caractérisé en ce qu'**il est utilisé pour fixer aux brides précitées (44, 48) deux brides annulaires additionnelles (40, 42) présentées par des disques de rotor (24, 26), les deux premières brides (44, 48) étant présentées par un flasque annulaire (46) de retenue de pieds d'aubes sur l'un des disques de rotor et par un cône d'entraînement (28) dans une turbomachine, en particulier dans un étage de turbine basse-pression d'un turboréacteur.

6. Dispositif selon la revendication 5, **caractérisé en ce que** la bride annulaire (44) du flasque (46) de retenue axiale de pieds d'aubes est serrée axialement sur la bride annulaire festonnée ou crénelée (48) du cône d'entraînement (28) et comporte au moins un élément en saillie (64, 66) destiné à s'engager axialement dans l'une des échancrures (62) de la bride annulaire (48) du cône d'entraînement quand le positionnement angulaire de ces deux brides annulaires l'une par rapport à l'autre est correct, les deux brides (44, 48) du flasque de retenue et du cône d'entraînement étant serrées entre les deux brides annulaires (40, 42) des disques de rotor (24, 26).

## Patentansprüche

1. Vorrichtung zum Zusammenfügen von zumindest zwei ringförmigen Flanschen, wie beispielsweise Flansche zum Befestigen von Teilen eines Rotors oder eines Stators einer Turbomaschine bzw. eines Turbotriebwerks, enthaltend Befestigungsmittel, wie etwa Bolzen (58) oder dergleichen, die in Öffnungen der Flansche eingreifen, wobei ein erster (48) der Flansche eine gekräuselte bzw. gezahnte Form hat und Aussparungen (62) aufweist, die zwischen voll ausgeführten Teilen (52) mit den Öffnungen (56) zum Durchtritt der Befestigungsmittel aufweist, **dadurch gekennzeichnet, dass** ein zweiter (44) der ringförmigen Flansche an seiner dem ersten Flansch zugewandten Seite zumindest ein vorspringendes Element (64, 66) aufweist, das dazu bestimmt ist, axial in eine der Aussparungen (62) des ersten Flansches einzugreifen, um eine richtige Winkelstellung der beiden Flansche (44, 48) zueinander zu erhalten.

2. Vorrichtung nach Anspruch 1, **dadurch gekennzeichnet, dass** das bzw. die Elemente (64, 66) die beiden Flansche (44, 48) axial voneinander beabstanden, wenn die Winkelstellung dieser beiden Flansche falsch ist.

3. Vorrichtung nach Anspruch 1 oder 2, **dadurch gekennzeichnet, dass** das bzw. jedes Element ein an den zweiten ringförmigen Flansch (44) angesetzter Zapfen (64) ist.

4. Vorrichtung nach Anspruch 1 oder 2, **dadurch gekennzeichnet, dass** das bzw. jedes Element ein an dem zweiten ringförmigen Flansch (44) spanend gefertigter bzw. zugeschnittener Vorsprung (66) ist.

5. Vorrichtung nach einem der vorangehenden Ansprüche, **dadurch gekennzeichnet, dass** sie dazu verwendet wird, um an den vorgenannten Flanschen (44, 48) zwei zusätzliche, ringförmige Flansche (40, 42) zu befestigen, die von Rotorscheiben (24, 26) getragen werden, wobei die beiden ersten Flansche (44, 48) von einem ringförmigen Lagerschild (46) zum Lagern von Schaufelfüßen an einer der Rotorscheiben und von einem Antriebskonus (28) bei einer Turbomaschine bzw. einem Turbotriebwerk, insbesondere in einer Niederdruckturbinenstufe eines Turbostrahltriebwerks, getragen werden.

6. Vorrichtung nach Anspruch 5, **dadurch gekennzeichnet, dass** der ringförmige Flansch (44) des Lagerschilds (46) zum axialen Lagern der Schaufelfüße axial mit dem gekräuselt bzw. gezahnt ausgeführten ringförmigen Flansch (48) des Antriebskonus (28) verspannt ist und zumindest ein vorspringendes Element (64, 66) aufweist, das dazu bestimmt ist, in eine der Aussparungen (62) des ringförmigen Flansches (48) des Antriebskonus dann axial einzugreifen, wenn die Winkelstellung von diesen beiden ringförmigen Flanschen zueinander richtig ist, wobei die beiden Flansche (44, 48) des Lagerschilds und des Antriebskonus zwischen den beiden ringförmigen Flanschen (40, 42) der Rotorscheiben (24, 26) verspannt sind.

## Claims

1. A device for assembling together at least two annular flanges, such as flanges for fastening together parts of a turbomachine rotor or stator, comprising fastening means such as bolts (58) or the like passing through orifices in said flanges, a first (48) of the flanges is of a festooned or crenellated shape and has notches (62) formed between solid portions (52) including the orifices (56) for passing the fastening means, **characterized in that**, a second (44) annular flange presents at least one projecting element (64, 66) on its face facing towards the first flange, being for axially engaging in a notch (62) of the first flange for a correct angular positioning of the two flanges (44,48) relative to one another.

2. A device according to claim 1, **characterized in that** said element(s) (64,66) space(s) the two flanges (44,48) axially apart from each other when the angular positioning of the two flanges is incorrect.

3. A device according to claim 1 or 2, **characterized in that** the or each element is a peg (64) fitted onto second annular flange (44).

4. A device according to claim 1 or 2, **characterized in that** the or each element is a stud (66) machined or cut out of the material of second annular flange (44).

5. A device according to any preceding claims, **characterized in that** it is used to fix annular flanges (44,48) to two additional annular flanges (40,42) provided on rotor disks (24,26), the first cited two flanges (44,48) being provided on an annulus (46) adapted for retaining blade roots on one of the rotor disks and on a drive cone (28) in a turbomachine, in particular in a low-pressure turbine stage of a turbojet.

6. A device according to claim 5, **characterized in that** the annular flange (44) of the annulus (46) for axially retaining the blade roots is clamped axially against a festooned or crenellated annular flange (48) of the drive cone (28) and includes at least one projecting element (64,66) for axially engaging in one of the notches (62) of the annular flange (48) of the drive cone when the angular positioning of the two annular flanges relative to one another is correct, the two annular flanges (44,48) of the annulus and the drive cone being clamped between the two annular flanges (40,42) of the rotor disks (24, 26).
